# EUROPEAN PATENT SPECIFICATION

(11) **EP 3 560 266 B1**
(45) Date of publication and mention of the grant of the patent: **02.03.2022**
(21) Application number: 16813353.6
(22) Date of filing: 20.12.2016
(51) Int. Cl.: H04W 74/08, H04W 16/14

(54) **RADIO TRANSMISSIONS ON CONTENTION-BASED RADIO RESOURCES**
FUNKÜBERTRAGUNGEN AUF KONKURRENZBASIERTEN FUNKRESSOURCEN
TRANSMISSIONS RADIO SUR DES RESSOURCES RADIO À BASE DE CONTENTION

(43) Date of publication of application: 30.10.2019
(73) Proprietor: Nokia Technologies Oy, 02610 Espoo (FI)
(72) Inventor: LUNDEN, Jari Petteri, 02230 Espoo (FI); KUUSELA, Markku Tapani, 15160 Lahti (FI)
(74) Representative: Nokia EPO representatives
(86) International application number: PCT/EP2016/081906
(87) International publication number: WO 2018/113919

(56) References cited:
- US-A1- 2015 351 115
- HUAWEI ET AL: "Coexistence mechanisms among LAA systems", 3GPP DRAFT; R1-150984, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Paris, France; 20150324 - 20150326 17 March 2015 (2015-03-17), XP050951350, Retrieved from the Internet: URL:http://www.3gpp.org/ftp/tsg_ran/WG1_RL 1/TSGR1_AH/LTE_LAA_1503/Docs/ [retrieved on 2015-03-17]
- "3rd Generation Partnership Project; Technical Specification Group Radio Access Network; Study on Licensed-Assisted Access to Unlicensed Spectrum; (Release 13)", 3GPP STANDARD; 3GPP TR 36.889, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V13.0.0, 18 June 2015 (2015-06-18), pages 1-87, XP051294239, [retrieved on 2015-06-18]

## Description

In radio communication systems, some radio resources may be allocated exclusively to one operator in a particular geographical area (which radio resources may be known as licensed spectrum), and other radio resources may be open to more than one operator (unlicensed spectrum), which may be referred to as contention-based resources.

One technique of avoiding interference between radio transmissions on the same contention-based radio resource involves radio devices (e.g. base stations) monitoring radio transmissions on the contention-based resource, and only making a radio transmission when the contention-based radio resource is determined to be idle according to a predetermined set of rules. One conventional technique is specified in WiFi protocol IEEE 802.11, and involves a radio device making radio transmissions on a contention-based radio resource, only if the radio device is not aware of any other radio device needing the contention-based radio resource (via a duration indicator in the MAC layer frame header recovered from radio transmissions by another radio device on the contention-based resource), and the radio device does not detect radio activity above a predetermined energy threshold on the contention-based radio resource for one or more predetermined periods of time.

The document 3GPP TSG RAN WG1 R1-150984, "Coexistence mechanisms among LAA systems", describes a transmission scheme with an adaptive CCA threshold, where the CCA threshold at a transmitting node is increased if there are only nodes nearby that are less sensitive to interference from that transmitting node.

Document US 2015/0351115 A1 describes a method for controlling RAN operations of a UE in unlicensed spectrum. In this method, the UE obtains information about WLAN transmissions in its vicinity and reports this information to an access node of the RAN. The document 3GPP TR 36.889 V13.0.0 (2015-06), "Study on Licensed-Assisted Access to Unlicensed Spectrum", defines design targets for coexistence with other unlicensed spectrum deployments, including fairness with respect to Wi-Fi and other LAA services. The inventors for the present invention have identified inefficiencies in the conventional technique, and have worked on increasing user throughput.

There is hereby provided a method for a network node comprising: monitoring radio transmissions on a contention-based radio resource; controlling one or more radio transmissions on said contention-based radio resource, at least partly based on information about when one or more first access nodes identified as interference-sensitive nodes, requiring more interference protection than one or more second access nodes, are using said contention-based radio resource; and identifying said one or more first access nodes as said interference-sensitive nodes based on requests for extra interference protection received from said one or more first access nodes.

According to one embodiment, said controlling comprises: controlling one or more radio transmissions on said contention-based resource, at least partly based on information about when said one or more first access nodes identified as said interference-sensitive nodes are using said contention-based radio resource for one or more radio transmissions, regardless of the power of said one or more radio transmissions of the one or more first access nodes.

According to one embodiment, the method further comprises: receiving timing information of radio transmissions made by one of said one or more first access nodes directly from said one of the one or more first access nodes.

According to one embodiment, said controlling said one or more radio transmissions on said contention-based radio resource comprises: refraining from making radio transmissions on said contention-based radio resource both (i) at the time of a radio transmission associated with one of said first access nodes, regardless of the power of said radio transmission, and (ii) at the time of radio activity on said contention-based radio resource above a predetermined threshold, regardless of the identity of the access node associated with the activity.

According to one embodiment, said one or more first access nodes comprise one or more access nodes capable of making radio transmissions on said contention-based radio resource according to a first protocol, and wherein said second access nodes comprises nodes capable of making radio transmissions on said contention-based radio resource according to a second protocol, which second protocol is more resistant than said first protocol to interference between radio transmissions on the contention-based radio resource.

There is also hereby provided a method for a network node comprising: recovering from radio transmissions measurement information about measurements made at one or more radio devices served by a first access node of a parameter of radio transmissions made by one or more second access nodes; determining, at least partly on the basis of the measurement information, whether radio transmissions associated with the first access node on a contention-based radio resource require extra protection against interference from radio transmissions on said contention-based radio resource by one or more of said second access nodes; and controlling the sending of a request for extra interference protection to one or more of said second access nodes, based at least partly on a result of said determining.

According to one embodiment, the first access node is capable of making radio transmissions on said contention-based resource according to a first protocol, and wherein a second protocol used by one or more other access nodes operating within the coverage area of said first access node for transmissions on said contention-based radio resource is more resistant than said first protocol to interference between radio transmissions on the contention-based radio resource.

There is also hereby provided an apparatus comprising: a processor and memory including computer program code, wherein the memory and computer program code are configured to, with the processor, cause the apparatus to: monitor radio transmissions on a contention-based radio resource; control one or more radio transmissions on said contention-based radio resource, at least partly based on information about when one or more first access nodes identified as interference-sensitive nodes, requiring more interference protection than one or more second access nodes, are using said contention-based radio resource; and identify said one or more first access nodes as said interference-sensitive nodes based on requests for extra interference protection received from said one or more first access nodes.

According to one embodiment, the memory and computer program code are further configured to, with the processor, cause the apparatus to: control one or more radio transmissions on said contention-based resource, at least partly based on information about when said one or more first access nodes identified as said interference-sensitive nodes are using said contention-based radio resource for one or more radio transmissions, regardless of the power of said one or more radio transmissions of the one or more first access nodes.

According to one embodiment, the memory and computer program code are further configured to, with the processor, cause the apparatus to: receive timing information of radio transmissions made by one of said one or more first access nodes directly from said one of the one or more first access nodes.

According to one embodiment, the memory and computer program code are further configured to, with the processor, cause the apparatus to: refrain from making radio transmissions on said contention-based radio resource both (i) at the time of a radio transmission associated with one of said first access nodes, regardless of the power of said radio transmission, and (ii) at the time of radio activity on said contention-based radio resource above a predetermined threshold, regardless of the identity of the access node associated with the activity.

According to one embodiment, said one or more first access nodes comprise one or more access nodes capable of making radio transmissions on said contention-based radio resource according to a first protocol, and wherein said second access nodes comprises nodes capable of making radio transmissions on said contention-based radio resource according to a second protocol, which second protocol is more resistant than said first protocol to interference between radio transmissions on the contention-based radio resource.

There is also hereby provided an apparatus comprising: a processor and memory including computer program code, wherein the memory and computer program code are configured to, with the processor, cause the apparatus to: recover from radio transmissions measurement information about measurements made at one or more radio devices served by a first access node of a parameter of radio transmissions made by one or more second access nodes; determine, at least partly on the basis of the measurement information, whether radio transmissions associated with the first access node on a contention-based radio resource require extra protection against interference from radio transmissions on said contention-based radio resource by one or more of said second access nodes; and control the sending of a request for extra interference protection to one or more of said second access nodes, based at least partly on a result of said determining.

According to one embodiment, the first access node is capable of making radio transmissions on said contention-based resource according to a first protocol, and wherein a second protocol used by one or more other access nodes operating within the coverage area of said first access node for transmissions on said contention-based radio resource is more resistant than said first protocol to interference between radio transmissions on the contention-based radio resource.

There is also hereby provided a computer program product comprising program code means which when loaded into a computer controls the computer to: monitor radio transmissions on a contention-based radio resource; control one or more radio transmissions on said contention-based radio resource, at least partly based on information about when one or more first access nodes identified as interference-sensitive nodes, requiring more interference protection than one or more second access nodes, are using said contention-based radio resource; and identify said one or more first access nodes as said interference-sensitive nodes based on requests for extra interference protection received from said one or more first access nodes.

There is also hereby provided a computer program product comprising program code means which when loaded into a computer controls the computer to: recover from radio transmissions measurement information about measurements made at one or more radio devices served by a first access node of a parameter of radio transmissions made by one or more second access nodes; determine, at least partly on the basis of the measurement information, whether radio transmissions associated with the first access node on a contention-based radio resource require extra protection against interference from radio transmissions on said contention-based radio resource by one or more of said second access nodes; and control the sending of a request for extra interference protection to one or more of said second access nodes, based at least partly on a result of said determining.

Embodiments of the present invention are described below, by way of example only, with reference to the accompanying drawings, in which:
Figure 1 illustrates an example of an environment in which an embodiment of the present invention can be employed;
Figure 2 illustrates an example of an apparatus for use at the UEs of Figure1;
Figure 3 illustrates one example of apparatus for use at the access nodes of Figure 1;
Figure 4 illustrates one example of operations at a processor of an access node according to an embodiment of the present invention;
Figure 5 illustrates an example of other operations at a processor of an access node according to an embodiment of the present invention;
Figure 6 illustrates the gains that can be achieved in user throughput using a technique according to an embodiment of the present invention; and
Figure 7 illustrates one implementation example for the operations of Figure 4.

The embodiment described in detail below relates to the example of a network comprising access nodes that additionally operate on unlicensed spectrum according to a LTE^{™} (Long Term Evolution) licensed-assisted access (LAA) protocol, and access nodes that operate on unlicensed spectrum according to WiFi protocol IEEE 802.11. However, the present invention is not limited to such networks, and may be usefully employed in other types of network, particularly networks comprising nodes operating on unlicensed spectrum according to two or more protocols with different levels of resistance to interference between radio transmissions on the same unlicensed spectrum. For example, LTE-based protocol communications are more resistant to interference than WiFi protocol communications, because of features such as fast link adaptation (LA) and hybrid automatic repeat request (HARQ). One example of another network system in which the present invention may be employed is MulteFire^{™}, which uses LTE technology solely in unlicensed spectrum, and (in contrast to LAA) does not involve aggregating unlicensed spectrum and licensed spectrum.

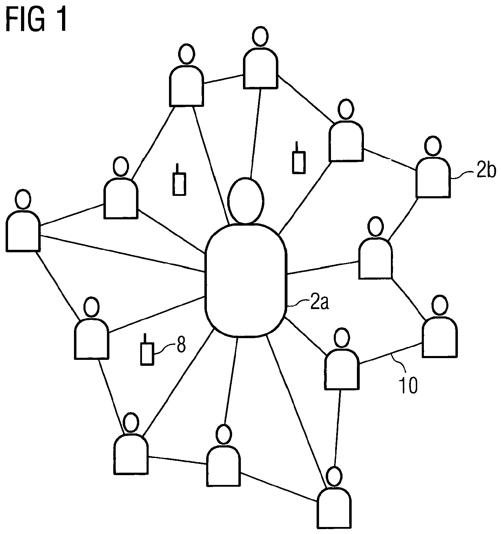

Figure 1 schematically shows an example of four user equipments (UEs) (for example, high complexity devices such as smartphones etc., low complexity devices such as MTC (machine-type communication) devices or any other type of wireless communication device) 8 located within the geographical coverage area of one or more access nodes associated with an operator, and capable of operating at least on unlicensed spectrum. Although not shown in Figure 1, the coverage area of the one or more access nodes associated with the operator will typically overlap with the coverage area of access nodes associated with another operator and capable of operating on the same unlicensed spectrum.

The access nodes may include: one or more relatively high power nodes 2a, which have a relatively large coverage area and may be referred to as macro nodes; and a higher density population of lower power nodes 2b, each having a relatively small coverage area.

The lower power nodes 2b may not all have the same transmission power characteristics. Some may transmit with higher power than others, and have larger coverage areas than others. Neighbouring access nodes 2a, 2b are connected to each other by e.g. X2 protocol links 10. The lower power nodes include nodes that operate on both unlicensed spectrum and licensed spectrum according to a LTE^{™} license- assisted access (LAA) technique, and nodes that operate on unlicensed spectrum according to a WiFi IEEE 802.11 protocol.

Figure 1 only shows one macro node 2a, but a radio access network typically comprises a large number of macro nodes 2a each operating one or more cells, and having coverage areas populated by lower power nodes 2b.

Each access node operating according to LTE^{™} protocol is connected to one or more core network entities and/or a mobile management entity etc., but these other entities are omitted from Figure 1 for conciseness.

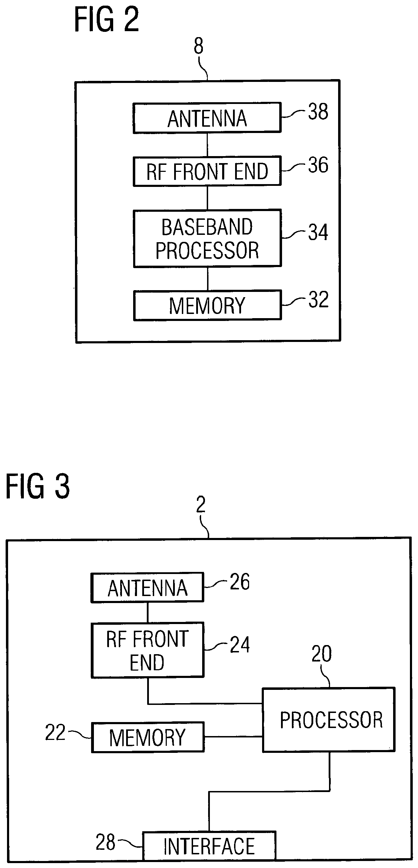

Figure 2 shows a schematic view of an example of apparatus for each UE 8. The UE 8 may be used for various tasks such as making (initiating) and receiving phone calls, receiving and sending data from and to a data network, and experiencing, for example, multimedia or other content. The UE 8 may be any device at least capable of both recovering data/information from radio transmissions made by access nodes, and making radio transmissions from which data/information is recoverable by an access node. Non-limiting examples of user equipment (UE) 8 include smartphones, tablets, personal computers, and devices without any user interface, such as devices that are designed for machine type communications (MTC).

With reference to Figure 2, a baseband processor 34, operating in accordance with program code stored at memory 32, processes digital signals received from a RF front end 36 comprising circuitry including analogue-to-digital convertors etc. for converting electric signals generated by radio transmissions in the antenna 38 to digital signals for the baseband processor 34. The UE baseband processor 34 also controls the generation and transmission of radio signals via radio-frequency (RF) front end 36 and antenna 38, again operating in accordance with program code stored at memory 32.

The UE 8 may also comprise an application processor (not shown) that generates user data for transmission via radio signals, and processes user data recovered from radio signals by baseband processor 34 and stored at memory 32. The application processor and the baseband processor 34 may be implemented as separate chips or combined into a single chip.

The memory 32 may be implemented as one or more chips. The memory 32 may include read-only memory, volatile memory, non-volatile memory and random-access memory. The above elements may be provided on one or more circuit boards.

The UE 8 may include additional other elements not shown in Figure 2. For example, the UE 8 may include a user interface such as a key pad, voice command recognition device, touch sensitive screen or pad, combinations thereof or the like, via which a user may control operation of the UE 8. The UE 8 may also include a display, a speaker and a microphone. Furthermore, the UE 8 may comprise appropriate connectors (either wired or wireless) for connecting to other devices and/or for connecting external accessories (e.g. hands-free equipment) thereto.

Figure 3 shows an example of apparatus for use at each access node 2a, 2b of Figure 1. A baseband processor 20, operating in accordance with program code stored at memory 22, processes digital signals received from a RF front end 24 comprising circuitry including analogue-to-digital convertors etc. for converting electric signals generated by radio transmissions in the antenna 26 to digital signals for the baseband processor 20. The baseband processor 20 also controls the generation and transmission of radio signals via radio-frequency (RF) front end 24 and antenna array 26, again operating in accordance with program code stored at memory 22.

Both the processor 20 and the memory 22 may be implemented as one or more chips. The memory 22 may include read-only memory, volatile memory, non-volatile memory and random-access memory. The above elements may be provided on one or more circuit boards. The apparatus also comprises an interface 28 for transferring data to and from one or more other entities such as e.g. core network entities, mobile management entities, and other access nodes in the same access network via e.g. X2 protocol links 10.

It should be appreciated that the apparatus shown in each of figures 2 and 3 described above may comprise further elements which are not directly involved with the embodiments of the invention described hereafter.

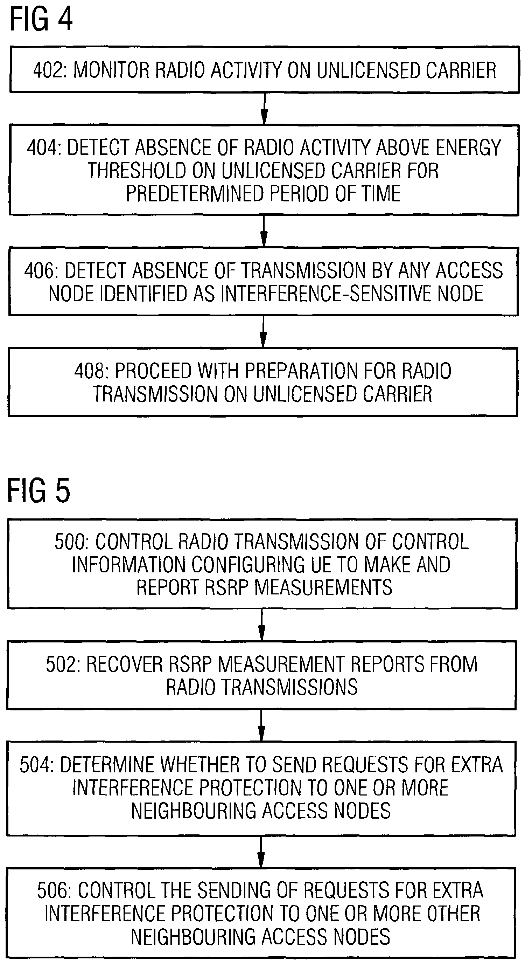

Figure 4 illustrates an example of operations at a processor at an access node 2a, 2b according to one embodiment. All operations carried out by the access node processor 20 follow program code stored at access node memory 22.

The processor 20 monitors radio transmissions on an unlicensed carrier via antenna 26 and RF front end 24 (STEP 402). Once the processor 20 detects the absence of radio activity on the unlicensed carrier having a received radio energy parameter (or other predetermined radio parameter) for a period of time defined by one or more predetermined conditions/rules (STEP 404), the processor 20 checks for on-going radio transmissions on the unlicensed carrier associated with any access node identified as an interference-sensitive access node (STEP 406). Only if the processor 20 does not detect any radio transmissions on the unlicensed carrier by an access node identified as an interference-sensitive (I-S) node (STEP 406), does the processor 20 proceed with preparation for one or more (uplink or downlink) radio transmissions on the unlicensed carrier (STEP 408).

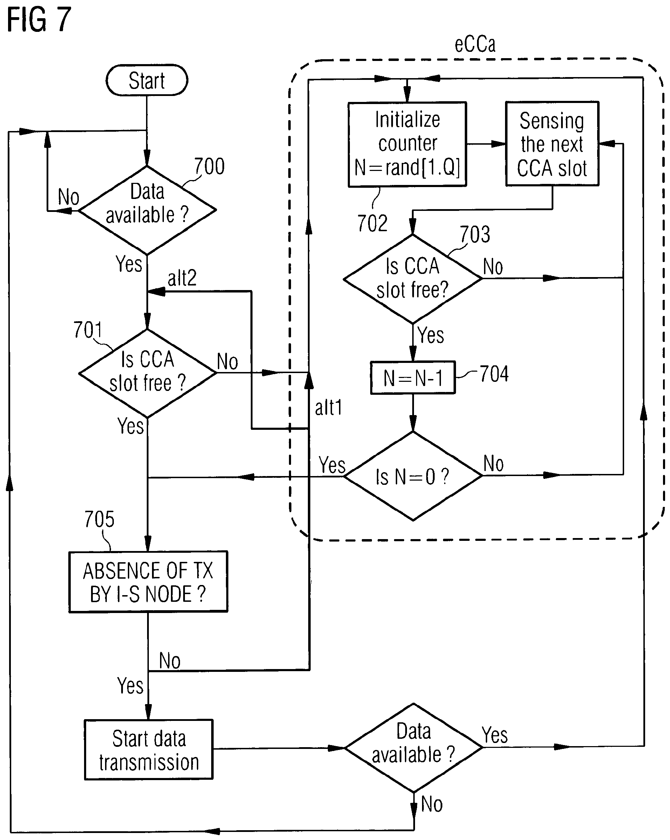

Figure 7 illustrates one non-limiting implementation example for the operations of Figure 4.

The processor 20 determines whether it has data to transmit on an unlicensed carrier (STEP 700). If there is data to transmit, the processor 20 monitors radio activity on the unlicensed carrier for a predetermined duration of time, referred to as a clear channel assessment (CCA) slot (STEP 701). If the processor 20 detects radio activity on the unlicensed carrier above the predetermined energy threshold (i.e. if this CCA check fails), the processor 20 proceeds with an extended CCA procedure beginning with the initialisation/resetting of a random back-off counter N = rand (1, Q) (STEP 702). According to this extended CCA procedure, the processor 20 repeats monitoring for radio activity above the predetermined energy threshold on the unlicensed carrier for at least N number of CCA slots, and more if the processor detects radio activity above the predetermined energy threshold on the unlicensed carrier in any one or more CCA slots (STEPS 703 and 704). If the processor 20 detects absence of radio activity above the predetermined energy threshold on the unlicensed carrier for N number of CCA slots (i.e. for as many CCA slots as required for the random back-off counter to reach zero), the processor 20 proceeds to monitor for on-going radio transmissions (TX) on the unlicensed carrier associated with any access node identified as an interference-sensitive (I-S) node (STEP 705). Similarly, if the CCA check at STEP 701 is successful (i.e. the processor 20 does not detect any radio activity above the predetermined energy threshold), the processor proceeds to monitor for on-going radio transmissions (TX) associated with any access node identified as an interference-sensitive (I-S) node on the unlicensed carrier (STEP 705). If there is no on-going radio transmission associated with an interference-sensitive node, the processor 20 proceeds with preparations for data transmission on the unlicensed carrier. On the other hand, if there is a radio transmission by an interference-sensitive node, the processor moves to STEP 702 (shown by arrow ALT 1 in Figure 7). According to one alternative, the processor 20 moves to STEP 701 (shown by arrow Alt 2 in Figure 7 (i.e. the processor first moves back to monitoring for radio activity above the predetermined energy threshold for one CCA slot only, without going immediately to the extended CCA procedure using the back-off counter).

Detection at the processor 20 of radio transmissions on the unlicensed carrier by an interference-sensitive node may be achieved by e.g. recovering control information (e.g. physical downlink control channel PDCCH information) from radio transmissions detected on the unlicensed carrier, and identifying the access node associated with the radio transmission from this control information. The processor 20 compares the access node identifier indicated in the control information against a list stored in memory of access nodes identified as interference-sensitive nodes. If the access node identifier is on the list, the processor 20 determines that the radio transmission is associated with an interference-sensitive node, i.e. the radio transmission is either made by an interference-sensitive node, or addressed to an interference-sensitive node. The processor 20 may also identify from this control information an indication of the duration of the time that the access node associated with the detected radio transmission needs for the radio transmission.

Alternatively, the processor 20 may receive information about the timing of radio transmissions made by an interference-sensitive access node on the unlicensed carrier, from the access node itself via e.g. a X2 link between the access nodes. In this case the radio transmissions of the interference-sensitive access node may not need to be even observable by the receiver of the access node 2, as the information of the transmission is conveyed to it over the backhaul or fronthaul link.

Figure 5 illustrates one example of a process of identifying access nodes as interference-sensitive nodes. An access node processor 20 controls the radio transmission of control information configuring the UEs 8 served by the access node 2b to measure the RSRP of radio transmissions by other access nodes, and transmit reports of any RSRP measurements over a predetermined threshold value (STEP 500). The access node processor 20 determines, at least partly on the basis of this reported measurement information and on the basis of one or more predetermined conditions, whether the access node needs extra protection against interference by radio transmissions made by any other one or more neighbouring access nodes (STEP 502). (For example, if the neighbouring access node signal received by the UE 8 is stronger than a threshold, it may be determined that extra protection is needed.) If the processor 20 determines that the access node does need extra protection against interference by radio transmissions made by any other one or more neighbouring access nodes (STEP 504), the processor 20 controls the sending to these one or more neighbouring access nodes of a request to treat the access node as an interference-sensitive node (STEP 506). In some embodiments the request could be to explicitly apply a stricter listen-before-talk (LBT) mechanism (i.e. to additionally monitor for any on-going radio transmission associated with the interference-sensitive node making the request) to protect the transmissions by the requesting access node. In response to the indication or request, the receiving access node may attempt to reduce its interference towards the requesting access node by applying the stricter LBT mechanism.

As mentioned above, there are some communication protocols that are more sensitive than others to interference by other radio transmissions on the same unlicensed spectrum. With the above-described technique, it is possible to set a more appropriate energy threshold for determining clearance to make radio transmissions, which better takes into account the capability of some access nodes to make reliable radio communications on unlicensed spectrum even with some interference by radio communications on the same unlicensed spectrum; and it is thereby possible to improve user throughput.

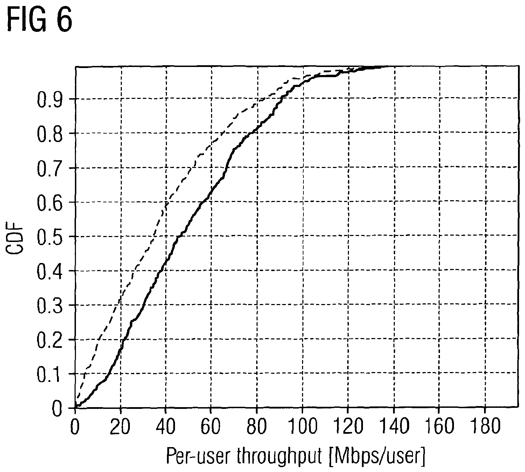

Figure 6 is a cumulative distribution function (CDF) graph illustrating the gains in user throughput that can be achieved with the above-described technique, for the example of an LAA outdoor scenario with 40MHz simulated bandwidth (2 x 20MHz LAA carriers). The upper plot shows the user throughput (UTP) performance for a conventional technique; and the lower plot shows the UTP performance for the above-described technique. As shown by Figure 6, there is a relative gain of about 240% for the 5%-ile (CDF = 0.05), and a relative gain of about 30% for the mean UTP (CDF = 0.5).

In one embodiment, the access node, in response to receiving from another (interference-sensitive) access node a request to apply a stricter LBT mechanism, determines whether it is able to fulfil the request. This can be based, for example, on the capabilities of the access node (i.e. whether or not it is it able to determine when the requesting interference-sensitive node is transmitting) and/or the load level of the access node (i.e. whether or not it is able to suppress some transmissions beyond what is required by the regulations governing the use of the spectrum). If the receiving access node is not able to fulfil the request, it may indicate this result to the requesting access node by sending a response over X2 (e.g. using an X2 Application Protocol message defined for this purpose). In such case the requesting (interference-sensitive) access node may still attempt to improve the reliability of its communications by applying a more robust MCS (modulation and coding scheme) in the transmissions towards the UE(s) affected by the neighbouring access node's interfering transmissions.

Appropriately adapted computer program code product may be used for implementing the embodiments, when loaded to a computer. The program code product for providing the operation may be stored on and provided by means of a carrier medium such as a carrier disc, card or tape. A possibility is to download the program code product via a data network. Implementation may be provided with appropriate software in a server.

Embodiments of the invention may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre stored design modules. Once the design for a semiconductor circuit has been completed, the resultant design, in a standardized electronic format (e.g., Opus, GDSII, or the like) may be transmitted to a semiconductor fabrication facility or "fab" for fabrication.

In addition to the modifications explicitly mentioned above, it will be evident to a person skilled in the art that various other modifications of the described embodiment may be made within the scope of the invention.

## Claims

1. A method for use at a second access node (2a) comprising:
monitoring radio transmissions on a contention-based radio resource; and
controlling one or more radio transmissions by the second access node on said contention-based radio resource, at least partly based on information about when one or more first access nodes (2b) identified as interference-sensitive nodes, requiring more interference protection than one or more second access nodes (2a), are using said contention-based radio resource; and
**characterized in that**
the method further comprises identifying said one or more first access nodes (2b) as said interference-sensitive nodes based on requests for extra interference protection received from said one or more first access nodes (2b).

2. A method according to claim 1, wherein said controlling comprises: controlling one or more radio transmissions on said contention-based resource, at least partly based on information about when said one or more first access nodes identified as said interference-sensitive nodes are using said contention-based radio resource for one or more radio transmissions, regardless of the power of said one or more radio transmissions of the one or more first access nodes.

3. A method according to claim 1 or claim 2, further comprising: receiving timing information of radio transmissions made by one of said one or more first access nodes directly from said one of the one or more first access nodes.

4. A method according to any of claims 1 to 3, wherein said controlling said one or more radio transmissions on said contention-based radio resource comprises: refraining from making radio transmissions on said contention-based radio resource both i) at the time of a radio transmission associated with one of said first access nodes, regardless of the power of said radio transmission, and ii) at the time of radio activity on said contention-based radio resource above a predetermined threshold, regardless of the identity of the access node associated with the activity.

5. A method according to claim 4, wherein said one or more first access nodes comprise one or more access nodes capable of making radio transmissions on said contention-based radio resource according to a first protocol, and wherein said second access nodes comprises nodes capable of making radio transmissions on said contention-based radio resource according to a second protocol, which second protocol is more resistant than said first protocol to interference between radio transmissions on the contention-based radio resource.

6. A method for use at a first acces node (2b) comprising:
recovering from radio transmissions measurement information about measurements made at one or more radio devices served by the first access node (2b) of a parameter of radio transmissions made by one or more second access nodes (2a);
**characterized in that** the method further comprises
determining, at least partly on the basis of the measurement information, whether radio transmissions associated with the first access node (2b) on a contention-based radio resource require extra protection against interference from radio transmissions on said contention-based radio resource by one or more of said second access nodes (2a); and
controlling the sending of a request for extra interference protection to one or more of said second access nodes (2a), based at least partly on a result of said determining.

7. A method according to claim 6, wherein the first access node is capable of making radio transmissions on said contention-based resource according to a first protocol, and wherein a second protocol used by one or more other access nodes operating within the coverage area of said first access node for transmissions on said contention-based radio resource is more resistant than said first protocol to interference between radio transmissions on the contention-based radio resource.

8. An apparatus (2, 2a) comprising: a processor (20) and memory (22) including computer program code, wherein the memory (22) and computer program code are configured to, with the processor (20), cause the apparatus (2, 2a, 2b) to:
monitor radio transmissions on a contention-based radio resource; and
control one or more radio transmissions on said contention-based radio resource, at least partly based on information about when one or more first access nodes (2b) identified as interference-sensitive nodes, requiring more interference protection than one or more second access nodes (2a), are using said contention-based radio resource; and
**characterized in that**
the apparatus (2, 2a) is further caused to identify said one or more first access nodes (2b) as said interference-sensitive nodes based on requests for extra interference protection received from said one or more first access nodes (2b).

9. An apparatus according to claim 8, wherein the memory and computer program code are further configured to, with the processor, cause the apparatus to: control one or more radio transmissions on said contention-based resource, at least partly based on information about when said one or more first access nodes identified as said interference-sensitive nodes are using said contention-based radio resource for one or more radio transmissions, regardless of the power of said one or more radio transmissions of the one or more first access nodes.

10. An apparatus according to claim 8 or claim 9, wherein the memory and computer program code are further configured to, with the processor, cause the apparatus to: receive timing information of radio transmissions made by one of said one or more first access nodes directly from said one of the one or more first access nodes.

11. An apparatus according to any of claims 8 to 10, wherein the memory and computer program code are further configured to, with the processor, cause the apparatus to: refrain from making radio transmissions on said contention-based radio resource both i)
at the time of a radio transmission associated with one of said first access nodes, regardless of the power of said radio transmission, and ii)
at the time of radio activity on said contention-based radio resource above a predetermined threshold, regardless of the identity of the access node associated with the activity.

12. An apparatus according to claim 11, wherein said one or more first access nodes comprise one or more access nodes capable of making radio transmissions on said contention-based radio resource according to a first protocol, and wherein said second access nodes comprises nodes capable of making radio transmissions on said contention-based radio resource according to a second protocol, which second protocol is more resistant than said first protocol to interference between radio transmissions on the contention-based radio resource.

13. An apparatus (2, 2b) comprising: a processor (20) and memory (22) including computer program code, wherein the memory and computer program code are configured to, with the processor (20) , cause the apparatus (2, 2b) to:
recover from radio transmissions measurement information about measurements made at one or more radio devices (8) served by a first access node (2b) of a parameter of radio transmissions made by one or more second access nodes (2a);
**characterized in that** the apparatus (2, 2b) is further caused to
determine, at least partly on the basis of the measurement information, whether radio transmissions associated with the first access node (2b) on a contention-based radio resource require extra protection against interference from radio transmissions on said contention-based radio resource by one or more of said second access nodes (2a); and
control the sending of a request for extra interference protection to one or more of said second access nodes (2a), based at least partly on a result of said determining.

14. An apparatus according to claim 13, wherein the first access node is capable of making radio transmissions on said contention-based resource according to a first protocol, and wherein a second protocol used by one or more other access nodes operating within the coverage area of said first access node for transmissions on said contention-based radio resource is more resistant than said first protocol to interference between radio transmissions on the contention-based radio resource.

15. A computer program product comprising program code means which when loaded into a computer controls the computer to perform any one of claims 1 to 7.

## Patentansprüche

1. Verfahren zur Verwendung an einem zweiten Zugangsknoten (2a), das Folgendes umfasst:
Überwachen von Funkübertragungen auf einer konfliktbasierten Funkressource; und
Steuern von einer oder mehreren Funkübertragungen durch den zweiten Zugangsknoten auf der konfliktbasierten Funkressource mindestens teilweise auf Basis von Informationen darüber, wann ein oder mehrere erste Zugangsknoten (2b), die als störungsanfällige Knoten identifiziert sind, die mehr Störungsschutz erfordern als ein oder mehrere zweite Zugangsknoten (2a), die konfliktbasierte Funkressource verwenden; und
**dadurch gekennzeichnet, dass**
das Verfahren ferner das Identifizieren des einen oder der mehreren ersten Zugangsknoten (2b) als die störungsanfälligen Knoten auf Basis von Anforderungen eines zusätzlichen Störungsschutzes, die von dem einen oder den mehreren ersten Zugangsknoten (2b) empfangen werden, umfasst.

2. Verfahren nach Anspruch 1, wobei das Steuern Folgendes umfasst: Steuern von einer oder mehreren Funkübertragungen auf der konfliktbasierten Ressource mindestens teilweise auf Basis von Informationen darüber, wann der eine oder die mehreren ersten Zugangsknoten, die als die störungsanfälligen Knoten identifiziert sind, die konfliktbasierte Funkressource für eine oder mehrere Funkübertragungen verwenden, unabhängig von der Leistung der einen oder der mehreren Funkübertragungen des einen oder der mehreren ersten Zugangsknoten.

3. Verfahren nach Anspruch 1 oder Anspruch 2, das ferner Folgendes umfasst: Empfangen von Zeitinformationen von Funkübertragungen, die von einem des einen oder der mehreren ersten Zugangsknoten direkt von dem einen des einen oder der mehreren ersten Zugangsknoten vorgenommen werden.

4. Verfahren nach einem der Ansprüche 1 bis 3, wobei das Steuern der einen oder der mehreren Funkübertragungen auf der konfliktbasierten Funkressource Folgendes umfasst: Unterlassen des Vornehmens von Funkübertragungen auf der konfliktbasierten Funkressource sowohl i) zur Zeit einer Funkübertragung, die mit einem der ersten Zugangsknoten verknüpft ist, unabhängig von der Leistung der Funkübertragung, und ii) zur Zeit einer Funkaktivität auf der konfliktbasierten Funkressource über einem vorbestimmten Schwellwert, unabhängig von der Identität des Zugangsknotens, der mit der Aktivität verknüpft ist.

5. Verfahren nach Anspruch 4, wobei der eine oder die mehreren ersten Zugangsknoten einen oder mehrere Zugangsknoten umfassen, die in der Lage sind, Funkübertragungen auf der konfliktbasierten Funkressource gemäß einem ersten Protokoll vorzunehmen, und wobei die zweiten Zugangsknoten Knoten umfassen, die in der Lage sind, Funkübertragungen auf der konfliktbasierten Funkressource gemäß einem zweiten Protokoll vorzunehmen, wobei das zweite Protokoll gegen eine Störung zwischen Funkübertragungen auf der konfliktbasierten Funkressource widerstandsfähiger ist als das erste Protokoll.

6. Verfahren zur Verwendung an einem ersten Zugangsknoten (2b), das Folgendes umfasst:
Wiederherstellen von Messinformationen über Messungen, die an einer oder mehreren Funkvorrichtungen vorgenommen wurden, die vom ersten Zugangsknoten (2b) bedient werden, eines Parameters von Funkübertragungen, die von einem oder mehreren zweiten Zugangsknoten (2a) vorgenommen werden, aus Funkübertragungen;
**dadurch gekennzeichnet, dass** das Verfahren ferner Folgendes umfasst
Bestimmen mindestens teilweise auf Basis der Messinformationen, ob Funkübertragungen, die mit dem ersten Zugangsknoten (2b) auf einer konfliktbasierten Funkressource verknüpft sind, einen zusätzlichen Schutz vor einer Störung durch Funkübertragungen auf der konfliktbasierten Funkressource durch einen oder mehrere der zweiten Zugangsknoten (2a) erfordern; und
Steuern des Sendens einer Anforderung von zusätzlichem Störungsschutz an eine oder mehrere der zweiten Zugangsknoten (2a) mindestens teilweise auf Basis eines Ergebnisses des Bestimmens.

7. Verfahren nach Anspruch 6, wobei der erste Zugangsknoten in der Lage ist, Funkübertragungen auf der konfliktbasierten Ressource gemäß einem ersten Protokoll vorzunehmen, und wobei ein zweites Protokoll, das von einem oder mehreren anderen Zugangsknoten, die im Abdeckungsbereich des ersten Zugangsknotens betrieben werden, für Übertragungen auf der konfliktbasierten Funkressource verwendet wird, gegen eine Störung zwischen Funkübertragungen auf der konfliktbasierten Funkressource widerstandsfähiger ist als das erste Protokoll.

8. Einrichtung (2, 2a) die Folgendes umfasst: einen Prozessor (20) und einen Speicher (22), der einen Computerprogrammcode beinhaltet, wobei der Speicher (22) und der Computerprogrammcode dazu ausgelegt sind, die Einrichtung (2, 2a, 2b) mit dem Prozessor (20) zu Folgendem zu veranlassen:
Überwachen von Funkübertragungen auf einer konfliktbasierten Funkressource; und
Steuern von einer oder mehreren Funkübertragungen auf der konfliktbasierten Funkressource mindestens teilweise auf Basis von Informationen darüber, wann ein oder mehrere erste Zugangsknoten (2b), die als störungsanfällige Knoten identifiziert sind, die mehr Störungsschutz erfordern als ein oder mehrere zweite Zugangsknoten (2a), die konfliktbasierte Funkressource verwenden; und
**dadurch gekennzeichnet, dass**
die Einrichtung (2, 2a) ferner veranlasst wird, auf Basis von Anforderungen eines zusätzlichen Störungsschutzes, die von dem einen oder den mehreren ersten Zugangsknoten (2b) empfangen werden, den einen oder die mehreren ersten Zugangsknoten (2b) als die störungsanfälligen Knoten zu identifizieren.

9. Einrichtung nach Anspruch 8, wobei der Speicher und der Computerprogrammcode ferner dazu ausgelegt sind, die Einrichtung mit dem Prozessor zu Folgendem zu veranlassen: Steuern von einer oder mehreren Funkübertragungen auf der konfliktbasierten Ressource mindestens teilweise auf Basis von Informationen darüber, wann der eine oder die mehreren ersten Zugangsknoten, die als die störungsanfälligen Knoten identifiziert sind, die konfliktbasierte Funkressource für eine oder mehrere Funkübertragungen verwenden, unabhängig von der Leistung der einen oder der mehreren Funkübertragungen des einen oder der mehreren ersten Zugangsknoten.

10. Einrichtung nach Anspruch 8 oder Anspruch 9, wobei der Speicher und der Computerprogrammcode ferner dazu ausgelegt sind, die Einrichtung mit dem Prozessor zu Folgendem zu veranlassen: Empfangen von Zeitinformationen von Funkübertragungen, die von einem des einen oder der mehreren ersten Zugangsknoten direkt von dem einen des einen oder der mehreren ersten Zugangsknoten vorgenommen werden.

11. Einrichtung nach einem der Ansprüche 8 bis 10, wobei der Speicher und der Computerprogrammcode ferner dazu ausgelegt sind, die Einrichtung mit dem Prozessor zu Folgendem zu veranlassen: Unterlassen des Vornehmens von Funkübertragungen auf der konfliktbasierten Funkressource sowohl i) zur Zeit einer Funkübertragung, die mit einem der ersten Zugangsknoten verknüpft ist, unabhängig von der Leistung der Funkübertragung, und ii) zur Zeit einer Funkaktivität auf der konfliktbasierten Funkressource über einem vorbestimmten Schwellwert, unabhängig von der Identität des Zugangsknotens, der mit der Aktivität verknüpft ist.

12. Einrichtung nach Anspruch 11, wobei der eine oder die mehreren ersten Zugangsknoten einen oder mehrere Zugangsknoten umfassen, die in der Lage sind, Funkübertragungen auf der konfliktbasierten Funkressource gemäß einem ersten Protokoll vorzunehmen, und wobei die zweiten Zugangsknoten Knoten umfassen, die in der Lage sind, Funkübertragungen auf der konfliktbasierten Funkressource gemäß einem zweiten Protokoll vorzunehmen, wobei das zweite Protokoll gegen eine Störung zwischen Funkübertragungen auf der konfliktbasierten Funkressource widerstandsfähiger ist als das erste Protokoll.

13. Einrichtung (2, 2b) die Folgendes umfasst: einen Prozessor (20) und einen Speicher (22), der einen Computerprogrammcode beinhaltet, wobei der Speicher und der Computerprogrammcode dazu ausgelegt sind, die Einrichtung (2, 2b) mit dem Prozessor (20) zu Folgendem zu veranlassen:
Wiederherstellen von Messinformationen über Messungen, die an einer oder mehreren Funkvorrichtungen (8) vorgenommen wurden, die von einem ersten Zugangsknoten (2b) bedient werden, eines Parameters von Funkübertragungen, die von einem oder mehreren zweiten Zugangsknoten (2a) vorgenommen werden, aus Funkübertragungen;
**dadurch gekennzeichnet, dass** die Einrichtung (2, 2b) ferner veranlasst wird, mindestens teilweise auf Basis der Messinformationen zu bestimmen, ob Funkübertragungen, die mit dem ersten Zugangsknoten (2b) auf einer konfliktbasierten Funkressource verknüpft sind, einen zusätzlichen Schutz vor einer Störung durch Funkübertragungen auf der konfliktbasierten Funkressource durch einen oder mehrere der zweiten Zugangsknoten (2a) erfordern; und
Steuern des Sendens einer Anforderung von zusätzlichem Störungsschutz an eine oder mehrere der zweiten Zugangsknoten (2a) mindestens teilweise auf Basis eines Ergebnisses des Bestimmens.

14. Einrichtung nach Anspruch 13, wobei der erste Zugangsknoten in der Lage ist, Funkübertragungen auf der konfliktbasierten Ressource gemäß einem ersten Protokoll vorzunehmen, und wobei ein zweites Protokoll, das von einem oder mehreren anderen Zugangsknoten, die im Abdeckungsbereich des ersten Zugangsknotens betrieben werden, für Übertragungen auf der konfliktbasierten Funkressource verwendet wird, gegen eine Störung zwischen Funkübertragungen auf der konfliktbasierten Funkressource widerstandsfähiger ist als das erste Protokoll.

15. Computerprogrammprodukt, das Programmcodemittel umfasst, die, wenn sie in einen Computer geladen werden, den Computer zum Durchführen von einem der Ansprüche 1 bis 7 steuern.

## Revendications

1. Procédé destiné à être utilisé au niveau d'un second nœud d'accès (2a) comprenant :
la surveillance de transmissions radio sur une ressource radio basée sur la contention ; et
le contrôle d'une ou plusieurs transmissions radio par le second nœud d'accès sur ladite ressource radio basée sur la contention, au moins en partie sur la base d'informations sur le moment où un ou plusieurs premiers nœuds d'accès (2b) identifiés comme des nœuds sensibles aux interférences, nécessitant plus de protection contre les interférences qu'un ou plusieurs seconds nœuds d'accès (2a), utilisent ladite ressource radio basée sur la contention ; et
**caractérisé en ce que**
le procédé comprend en outre l'identification desdits un ou plusieurs premiers nœuds d'accès (2b) comme lesdits nœuds sensibles aux interférences sur la base de demandes pour une protection contre les interférences supplémentaire reçues en provenance desdits un ou plusieurs premiers nœuds d'accès (2b).

2. Procédé selon la revendication 1, dans lequel ledit contrôle comprend : le contrôle d'une ou plusieurs transmissions radio sur ladite ressource basée sur la contention, au moins en partie sur la base d'informations sur le moment où lesdits un ou plusieurs premiers nœuds d'accès identifiés comme lesdits nœuds sensibles aux interférences utilisent ladite ressource radio basée sur la contention pour une ou plusieurs transmissions radio, quelle que soit la puissance desdites une ou plusieurs transmissions radio des un ou plusieurs premiers nœuds d'accès.

3. Procédé selon la revendication 1 ou la revendication 2, comprenant en outre : la réception d'informations de positionnement temporel de transmissions radio effectuées par un desdits un ou plusieurs premiers nœuds d'accès directement en provenance dudit un des un ou plusieurs premiers nœuds d'accès.

4. Procédé selon l'une quelconque des revendications 1 à 3, dans lequel ledit contrôle desdites une ou plusieurs transmissions radio sur ladite ressource radio basée sur la contention comprend : le fait de s'abstenir d'effectuer des transmissions radio sur ladite ressource radio basée sur la contention à la fois (i) au moment d'un transmission radio associée à l'un desdits premiers nœuds d'accès, quelle que soit la puissance de ladite transmission radio, et (ii) au moment d'une activité radio sur ladite ressource radio basée sur la contention supérieure à un seuil prédéterminé, quelle que soit l'identité du nœud d'accès associé à l'activité.

5. Procédé selon la revendication 4, dans lequel lesdits un ou plusieurs premiers nœuds d'accès comprennent un ou plusieurs nœuds d'accès capables d'effectuer des transmissions radio sur ladite ressource radio basée sur la contention selon un premier protocole, et dans lequel lesdits seconds nœuds d'accès comprennent des nœuds capables d'effectuer des transmissions radio sur ladite ressource radio basée sur la contention selon un second protocole, lequel second protocole est plus résistant que ledit premier protocole aux interférences entre des transmissions radio sur la ressource radio basée sur la contention.

6. Procédé destiné à être utilisé au niveau d'un premier nœud d'accès (2b) comprenant :
la récupération à partir de transmissions radio d'informations de mesure concernant des mesures effectuées au niveau d'un ou plusieurs dispositifs radio desservis par le premier nœud d'accès (2b) d'un paramètre de transmissions radio effectuées par un ou plusieurs seconds nœuds d'accès (2a) ;
**caractérisé en ce que** le procédé comprend en outre
la détermination, au moins en partie sur la base des informations de mesure, de si des transmissions radio associées au premier nœud d'accès (2b) sur une ressource radio basée sur la contention nécessitent une protection supplémentaire contre les interférences provenant de transmissions radio sur ladite ressource radio basée sur la contention par un ou plusieurs desdits seconds nœuds d'accès (2a) ; et
le contrôle de l'envoi d'une demande pour une protection contre les interférences supplémentaire à un ou plusieurs desdits seconds nœuds d'accès (2a), sur la base au moins en partie d'un résultat de ladite détermination.

7. Procédé selon la revendication 6, dans lequel le premier nœud d'accès est capable d'effectuer des transmissions radio sur ladite ressource basée sur la contention selon un premier protocole, et dans lequel un second protocole utilisé par un ou plusieurs autres nœuds d'accès opérant dans la zone de couverture dudit premier nœud d'accès pour des transmissions sur ladite ressource radio basée sur la contention est plus résistant que ledit premier protocole aux interférences entre des transmissions radio sur la ressource radio basée sur la contention.

8. Appareil (2, 2a) comprenant : un processeur (20) et une mémoire (22) incluant un code de programme informatique, dans lequel la mémoire (22) et le code de programme informatique sont configurés pour, avec le processeur (20), amener l'appareil (2, 2a, 2b) à :
surveiller des transmissions radio sur une ressource radio basée sur la contention ; et
contrôler une ou plusieurs transmissions radio sur ladite ressource radio basée sur la contention, au moins en partie sur la base d'informations sur le moment où un ou plusieurs premiers nœuds d'accès (2b) identifiés comme des nœuds sensibles aux interférences, nécessitant plus de protection contre les interférences qu'un ou plusieurs seconds nœuds d'accès (2a), utilisent ladite ressource radio basée sur la contention ; et
**caractérisé en ce que**
l'appareil (2, 2a) est en outre amené à identifier lesdits un ou plusieurs premiers nœuds d'accès (2b) comme lesdits nœuds sensibles aux interférences sur la base de demandes pour une protection contre les interférences supplémentaire reçues en provenance desdits un ou plusieurs premiers nœuds d'accès (2b).

9. Appareil selon la revendication 8, dans lequel la mémoire et le code de programme informatique sont en outre configurés pour, avec le processeur, amener l'appareil à : contrôler une ou plusieurs transmissions radio sur ladite ressource basée sur la contention, au moins en partie sur la base d'informations sur le moment où lesdits un ou plusieurs premiers nœuds d'accès identifiés comme lesdits les nœuds sensibles aux interférences utilisent ladite ressource radio basée sur la contention pour une ou plusieurs transmissions radio, quelle que soit la puissance desdites une ou plusieurs transmissions radio des un ou plusieurs premiers nœuds d'accès.

10. Appareil selon la revendication 8 ou la revendication 9, dans lequel la mémoire et le code de programme informatique sont en outre configurés pour, avec le processeur, amener l'appareil à :
recevoir des informations de positionnement temporel de transmissions radio effectuées par un desdits un ou plusieurs premiers nœuds d'accès directement en provenance dudit un des un ou plusieurs premiers nœuds d'accès.

11. Appareil selon l'une quelconque des revendications 8 à 10, dans lequel la mémoire et le code de programme informatique sont en outre configurés pour, avec le processeur, amener l'appareil à : s'abstenir d'effectuer des transmissions radio sur ladite ressource radio basée sur la contention à la fois (i) au moment d'une transmission radio associée à l'un desdits premiers nœuds d'accès, quelle que soit la puissance de ladite transmission radio, et (ii) au moment d'une activité radio sur ladite ressource radio basée sur la contention supérieure à un seuil prédéterminé, quelle que soit l'identité du nœud d'accès associé à l'activité.

12. Appareil selon la revendication 11, dans lequel lesdits un ou plusieurs premiers nœuds d'accès comprennent un ou plusieurs nœuds d'accès capables d'effectuer des transmissions radio sur ladite ressource radio basée sur la contention selon un premier protocole, et dans lequel lesdits seconds nœuds d'accès comprennent des nœuds capables d'effectuer des transmissions radio sur ladite ressource radio basée sur la contention selon un second protocole, lequel second protocole est plus résistant que ledit premier protocole aux interférences entre des transmissions radio sur la ressource radio basée sur la contention.

13. Appareil (2, 2b) comprenant : un processeur (20) et une mémoire (22) incluant un code de programme informatique, dans lequel la mémoire et le code de programme informatique sont configurés pour, avec le processeur (20), amener l'appareil (2, 2b) à :
récupérer à partir de transmissions radio des informations de mesure concernant des mesures effectuées au niveau d'un ou plusieurs dispositifs radio (8) desservis par un premier nœud d'accès (2b) d'un paramètre de transmissions radio effectuées par un ou plusieurs seconds nœuds d'accès (2a) ;
**caractérisé en ce que** l'appareil (2, 2b) est en outre amené à :
déterminer, au moins en partie sur la base des informations de mesure, si des transmissions radio associées au premier nœud d'accès (2b) sur une ressource radio basée sur la contention nécessitent une protection supplémentaire contre les interférences provenant de transmissions radio sur ladite ressource radio basée sur la contention par un ou plusieurs desdits des seconds nœuds d'accès (2a) ; et
contrôler l'envoi d'une demande pour une protection contre les interférences supplémentaire à un ou plusieurs desdits seconds nœuds d'accès (2a), sur la base au moins en partie d'un résultat de ladite détermination.

14. Appareil selon la revendication 13, dans lequel le premier nœud d'accès est capable d'effectuer des transmissions radio sur ladite ressource basée sur la contention selon un premier protocole, et dans lequel un second protocole utilisé par un ou plusieurs autres nœuds d'accès opérant dans la zone de couverture dudit premier nœud d'accès pour des transmissions sur ladite ressource radio basée sur la contention est plus résistant que ledit premier protocole aux interférences entre des transmissions radio sur la ressource radio basée sur la contention.

15. Produit de programme informatique comprenant des moyens de code de programme qui, lorsqu'ils sont chargés dans un ordinateur, contrôlent l'ordinateur pour réaliser l'une quelconque des revendications 1 à 7.
